(19) Europäisches Patentamt
European Patent Office
Office européen des brevets

(11) **EP 2 023 226 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
***G05F 1/573*** *(2006.01)*

(21) Anmeldenummer: **08011312.9**

(22) Anmeldetag: **21.06.2008**

(54) **Schaltungsanordnung zur Regelung eines Stroms, der durch eine Last fliesst**

Switching device for regulating a current flowing through a load

Circuit destiné à la régulation d'un courant traversant une charge

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.07.2007 DE 102007035339**

(43) Veröffentlichungstag der Anmeldung:
**11.02.2009 Patentblatt 2009/07**

(73) Patentinhaber: **Sitronic Ges. für elektrotechnische Ausrüstung**
**mbH & Co. KG**
**71116 Gärtringen (DE)**

(72) Erfinder: **Zametzky, Klaus**
**91126 Schwabach (DE)**

(74) Vertreter: **Kohler Schmid Möbus**
**Patentanwälte**
**Ruppmannstraße 27**
**70565 Stuttgart (DE)**

(56) Entgegenhaltungen:
**US-A- 3 076 135          US-A- 3 512 047**
**US-A- 3 959 713          US-A1- 2003 147 193**
**US-A1- 2005 035 749**

- **STOTZ D: "STROMBEGRENZUNG OPTIMAL. EINSTELLUNG DEFINIERTER STROEME UND SCHUTZGEGEN UEBERSTROEME" ELEKTRONIK, WEKA FACHZEITSCHRIFTENVERLAG, POING, DE, Bd. 47, Nr. 26, 22. Dezember 1998 (1998-12-22), Seiten 72-80, XP000875817 ISSN: 0013-5658**

**Beschreibung**

Die Erfindung betrifft eine Schaltungsanordnung zur Regelung eines Stroms durch einen Gebläsemotor als Last mit den Merkmalen des Oberbegriffs von Anspruch 1.

US 2003/0147193 A1 offenbart die Merkmale des Oberbegriffs des Anspruchs 1. Dieses Dokument beschreibt eine gegen Kurzschlüsse geschützte Spannungsreglerschaltung für eine Last, die im Wesentlichen aus einem ohmschen Widerstand besteht.

US A 3 512 047 beschreibt eine Steuerschaltung zur Vermeidung von Stoßströmen in Lasten deren Anfangsbedingungen sich stark von ihren "Steady-State"-Bedingungen unterscheiden.

Durch die Schaltungsanordnung kann beispielsweise eine Regelschaltung für einen als Last dienenden Gebläsemotor in einem Kraftfahrzeuggebläse bereitgestellt werden, welche die Funktion eines Kurzschluss- und Überstromschutzes für den Gebläsemotor übernimmt. Der Überstromschutz wird hierbei durch eine Strombegrenzungsfunktion realisiert, d.h. im Gebläseregler befindet sich eine Regelschaltung, welche die Steuerspannung eines als Stellglied dienenden Leistungstransistors begrenzend so regelt, dass der Motorstrom unter einem vorgegebenen Grenzwert bleibt.

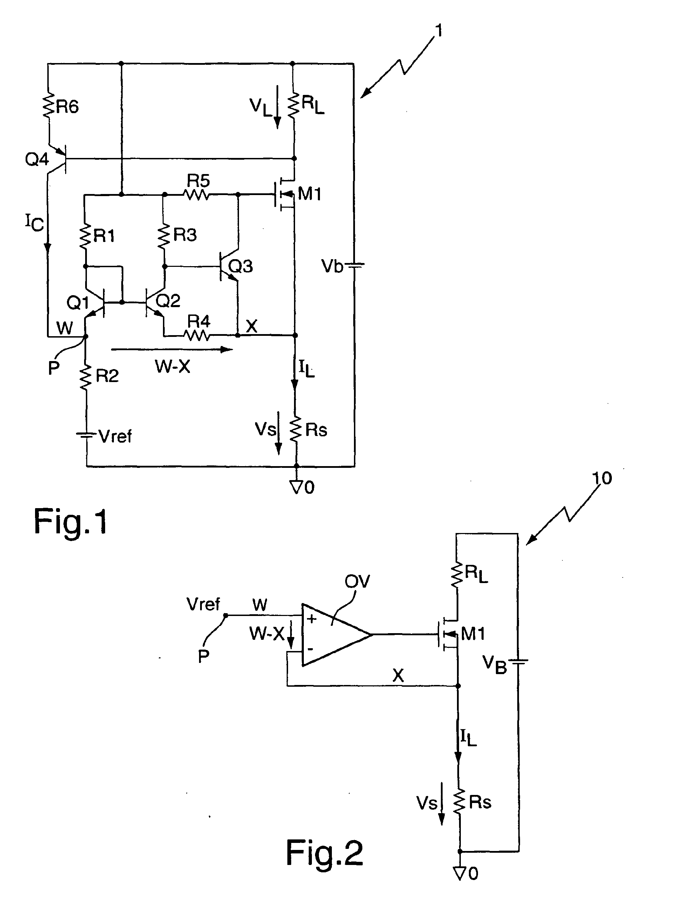

Eine derartige Schaltungsanordnung **10** als Regelschaltung für einen Gebläsemotor eines Kfz-Gebläses ist in **Fig. 2** gezeigt. Die Schaltungsanordnung 10 wird mit einer Versorgungsspannung $V_B$ von 14V betrieben, welche von einer Fahrzeug-Batterie bzw. (nicht gezeigten) Lichtmaschine geliefert wird. Ein Laststrom $I_L$ durch den in Fig. 2 als Lastwiderstand $R_L$ dargestellten Gebläsemotor wird durch Einstellen der Steuerspannung eines als Stellglied dienenden Leistungstransistors **M1** (MOS-FET) so geregelt, dass er einen maximalen Wert nicht überschreitet. Als Regelgröße **X** dient hierbei ein Spannungsabfall $V_S$ an einem im Laststromkreis angeordneten, vom Laststrom $I_L$ durchflossenen, niederohmigen Shunt-Widerstand $R_S$, der einen Wert im mΩ-Bereich aufweist. Als Führungsgröße **W** für die Regelung des Laststroms $I_L$ wird an einem Abgriff **P** eine Referenzspannung $V_{ref}$ bereitgestellt, welche als Referenz für den Laststrom $I_L$ im Kurzschlussfall dient, und welche im mV-Bereich liegen kann. Die Schaltungsanordnung 10 weist weiterhin einen Differenzverstärker **OV** zur Verstärkung einer Regelabweichung W-X zwischen Führungsgröße W und Regelgröße X auf, um die Steuerspannung des Leistungstransistors M1 begrenzend zu regeln.

Die in Fig. 2 gezeigte Schaltungsanordnung 10 begrenzt den Laststrom $I_L$ auf einen konstanten Wert, welcher über die Referenzspannung $V_{ref}$ festgelegt wird. Im Normalbetrieb eines KfZ-Gebläses sollte aber neben einem wirkungsvollen Kurzschluss-Schutz auch ein hoher Motorstromfluss gewährleistet werden, was dadurch erreicht werden kann, dass der maximale Laststrom $I_L$ von der Spannung $V_L$, welche über der Last bzw. dem Gebläsemotor abfällt, abhängig ist, d.h. es sollte gelten: $I_L = f(V_L)$, wobei die maximale Motorstromaufnahme mit steigender Spannung $V_L$ zunimmt.

Ferner führt die in Fig. 2 gezeigte Schaltungsanordnung 10 auch dann nicht zu optimalen Ergebnissen, wenn die Leistungsaufnahme durch den Lastwiderstand $R_L$ nicht konstant ist, sondern z.B. von der Umgebungstemperatur abhängt. Dies ist z.B. bei einem Gebläsemotor eines KfZ-Gebläses der Fall, und zwar deshalb, weil warme Luft aufgrund der schnelleren Bewegung der Luftmoleküle einen höheren Strömungswiderstand für den Gebläsemotor aufweist als kalte Luft, denn in einem betrachteten Zeitraum und Raumvolumen kommt es in warmer Luft statistisch häufiger zu Kollisionsvorgängen zwischen Molekülen als in kalter Luft. Analog zum Elektronengas in einem metallischen Leiter, in dem die Beweglichkeit der Elektronen mit der Temperatur sinkt, der elektrische Widerstand steigt, steigt daher auch der Strömungswiderstand des Luftstromes in einem HVAC (Heating, Ventilation and Air Conditioning)-System mit der Gastemperatur. Strömt die Luft langsamer, so nimmt der Gebläsemotor weniger Strom auf als bei hoher Luftströmungsgeschwindigkeit. Viele Klimatisierungssysteme haben daher die Eigenschaft, bei gegebener Motorspannung bei Kälte mehr Strom aufzunehmen als bei Wärme.

Die Motorstromaufnahme sinkt folglich mit der Temperatur. Dieses Verhalten erweist sich bei Ansteuerung des Gebläsemotors mit einem linearen Gebläseregler als günstig, weil mit sinkender Motorstromaufnahme auch die Verlustleistung im Leistungstransistor des Gebläsereglers sinkt. Da die maximal zulässige Verlustleistung des Gebläsereglers mit zunehmender Umgebungstemperatur abnimmt, wäre es daher günstig, wenn der maximale Laststrom $I_L$ mit steigender Temperatur sinken würde, d.h. eine Funktion der Temperatur T wäre ($I_L = f(T)$).

Um eine Regelung des maximalen Laststroms in Abhängigkeit von der Temperatur zu erzielen ist es bekannt, einen Temperatursensor zu verwenden. Ein solcher Temperatursensor mit zugeordneter Schaltungsanordnung ist aber insbesondere bei Kfz-Anwendungen, deren Funktion über einen großen Temperaturbereich von -30°C bis 150°C hinweg gewährleistet sein muss, mit hohen Kosten verbunden.

Der Erfindung liegt die Aufgabe zugrunde, eine kostengünstige, aus wenigen Bauteilen bestehende, Schaltungsanordnung zur Regelung des Stroms durch einen Gebläsemotor, bereitzustellen, bei welcher der Laststrom in Abhängigkeit von der an der Last abfallenden Spannung und bevorzugt von der Temperatur geregelt werden kann.

Diese Aufgabe wird durch die Schaltungsanordnung mit den Merkmalen von Anspruch 1 gelöst. Hierdurch kann erreicht werden, dass der Laststrom proportional mit der Lastspannung ansteigt, da der für die Einstellung der Referenzspannung am Abgriff wesentliche Kollektorstrom des Transistors einen zur Lastspannung proportionalen Anteil enthält. Unter Kollektor- und Emitterwiderstand werden im Sinne dieser Anmeldung Widerstände als diskrete Bauteile verstanden, welche im zugehörigen Emitter- bzw. Kollektorkreis angeordnet sind.

Im Gegensatz zu herkömmlichen Differenzverstärkern, deren Eingangsstufe in der Regel von emittergekoppelten Transistoren gebildet wird, wodurch eine hohe Eingangsimpedanz erzielt wird, ist bei der vorliegenden Schaltung ein hoher Eingangswiderstand des Differenzverstärkers nicht notwendig, da der in der Schaltungsanordnung verwendete Shunt-Widerstand niederohmig ausgeführt ist. Daher können in der erfindungsgemäßen Schaltungsanordnung basisgekoppelte Transistoren im Differenzverstärker zum Einsatz kommen.

Bei einer vorteilhaften Weiterbildung dieser Ausführungsform weist die Schaltungsanordnung eine Einrichtung zur Einstellung eines konstanten Verhältnisses der Kollektorruheströme durch die basisgekoppelten Transis-toren auf, welche bevorzugt durch zwei Widerstände gebildet ist. Der Erfinder hat erkannt, dass die Regelung des Laststroms in Abhängigkeit von der Temperatur über ein definiertes Temperaturverhalten der Schaltungsanordnung bzw. einzelner Bauteile dieser Schaltungsanordnung realisiert werden kann. Hierdurch kann auf die Verwendung eines Temperatursensors verzichtet werden.

Als Temperatursensorsignal wird hierbei die Offsetspannung eines (basisgekoppelten) Differenzverstärkers verwendet, dessen Transistoren gezielt bei unterschiedlich gewichteten Kollektorruheströmen betrieben werden. Hierdurch kann bei einer Schaltungsanordnung, bei welcher der Laststrom von der Differenz der Basis-Emitter-Spannungen der beiden basisgekoppelten Transistoren abhängt, ein konstanter Temperaturkoeffizient, d.h. ein linearer Zusammenhang zwischen Laststrom und Temperatur erhalten werden. Der Temperaturkoeffizient kann hierbei in Abhängigkeit vom Verhältnis der Ströme zueinander sowohl im Betrag als auch im Vorzeichen festgelegt werden. Daher kann man die Schaltung so dimensionieren, dass sie bei niedrigen Temperaturen höhere und mit zunehmender Temperatur niedrigere Ströme zulässt und sich so dem Temperaturverhalten der Last anpasst, wobei das Temperaturverhalten der Schaltung ausschließlich durch Bauteildimensionierung erreicht wird. Für die Temperatursteuerfunktion sind daher keine weiteren Bauelemente erforderlich.

Der Laststrom kann in Abhängigkeit von der Temperatur eines Umgebungsmediums, insbesondere dem Luftstrom einer Klimaanlage oder der Kühlflüssigkeit eines Kühlwasserkreises geregelt werden, mit dem die beiden basisgekoppelten Transistoren thermisch gekoppelt sind. Alternativ oder zusätzlich kann der Laststrom auch in Abhängigkeit von der Temperatur eines als Stellglied dienenden Leistungstransistors oder der Temperatur der Last geregelt werden, wenn die beiden basisgekoppelten Transistoren mit dem Leistungstransistor bzw. der Last thermisch gekoppelt werden. Hierdurch kann ein thermisches Überhitzen dieser Bauelemente vermieden werden.

Bei Regelung eines KfZ-Gebläses sind z.B. im Winter bei kalter Elektronik mit einer solchen Schaltung hohe Motoranlaufströme möglich. Mit steigender Umgebungstemperatur sinkt die Eingriffsgrenze des Stromgrenzreglers, er schützt die Gebläsereglerelektronik, aber auch Steckkontakte, Leitungen und schließlich auch den Gebläsemotor vor thermischem Stress. Dennoch stellt die Elektronik eine hohe Performance bereit, wenn die Temperaturen unkritisch sind. Die Dimensionierung einiger Teile der Klimaanlage kann bei Verwendung einer solchen Schaltungsanordnung schlanker und kostengünstiger erfolgen.

Bevorzugt ist die Einrichtung durch zwei Widerstände gebildet, wobei die Schaltungsanordnung derart dimensioniert ist, dass das Verhältnis der Kollektorströme im Wesentlichen durch das Verhältnis der Widerstände gegeben ist. Die Widerstände sind hierbei in den jeweiligen Kollektorkreisen der Transistoren angeordnet. Alternativ können z.B. auch zwei Konstantstromquellen zur Einstellung eines konstanten Verhältnisses der Kollektorströme vorgesehen sein. Es ist weiterhin vorteilhaft für die Temperaturregelung, wenn die beiden basisgekoppelten Transistoren gleiche Kollektor-Emitter-Spannungen aufweisen.

Bei einer besonders bevorzugten Ausführungsform sind die basisgekoppelten Transistoren des Differenzverstärkers durch einen Doppeltransistor gebildet. In diesem Fall sind die beiden Transistoren thermisch gekoppelt und weisen gepaarte Eigenschaften auf, was für die definierte Einstellung der Temperaturabhängigkeit der Schaltung günstig ist.

Eine vorteilhafte Ausführungsform weist mindestens einen weiteren Transistor, bevorzugt einen Leistungstransistor, als Stellglied zur Beeinflussung des Laststroms auf. Leistungstransistoren werden z.B. zur Steuerung von großen Strömen, wie sie in Gebläsemotoren von Kraftfahrzeugen auftreten, benötigt. Der Leistungstransistor ist bevorzugt als MOSFET ausgebildet, wodurch die Einstellung des Laststroms spannungsgesteuert, d.h. praktisch ohne Steuerstrom ermöglicht wird.

Bei einer bevorzugten Weiterbildung weist die Steuerschaltung einen dritten Transistor zur begrenzenden Regelung der Steuerspannung des weiteren Transistors auf. Die Steuerspannung des Leistungstransistors wird über den dritten Transistor auf einen maximalen Wert begrenzt. Bei geeigneter Verschaltung des Transistors z.B. mit einem Widerstand kann die Gatespannung des Leistungstansistors gesenkt werden, wenn der Kollektorstrom des dritten Transistors zunimmt.

Bei einer weiteren vorteilhaften Weiterbildung sind der Differenzverstärker und der dritte Transistor derart verschaltet, dass der dritte Transistor die Steuerspannung des weiteren Transistors in Abhängigkeit von der Regelabweichung beeinflusst. Dies ermöglicht die Realisierung eines Regelkreises auf besonders einfache Weise.

Es ist besonders bevorzugt, die Schaltungsanordnung aus diskreten Bauteilen aufzubauen. Eine solche Schaltung ist robust und lässt sich daher auch bei hohen Temperaturen von bis zu 150°C betreiben. Weiterhin lässt sich die Schaltungsanordnung mit verhältnismäßig wenigen Bauteilen realisieren und benötigt insbesondere keinen Temperatursensor.

Die Erfindung ist auch realisiert in einem Kraftfahrzeuggebläse mit einer Schaltungsanordnung nach einem der vorhergehenden Ansprüche, bei dem die Last durch einen Gebläsemotor gebildet ist. Mit einer Stromregelung, welche in Abhängigkeit von der Temperatur und der Lastspannung gesteuert wird, kann in einem Gebläseregler ein Überstrom- und Kurzschluss-schutz realisiert werden, der den Motorstrom über die gesamte Strom-Spannungs-Kennlinie des Motors überwacht. Die Schaltung lässt hierbei nur Motorströme zu, die realistisch zur anliegenden Motorspannung passen.

Ausführungsbeispiele der erfindungsgemäßen Schaltungsanordnung sind in den schematischen Zeichnungen dargestellt und werden in der nachfolgenden Beschreibung erläutert. Es zeigt:

**Fig. 1** ein Schaltbild einer Ausführungsform der erfindungsgemäßen Schaltungsanordnung zur Regelung eines Laststroms durch einen Gebläsemotor;

**Fig. 2** eine Schaltungsanordnung zur Regelung eines Laststroms nach dem Stand der Technik,

**Fig. 3** einen Transistor der Schaltungsanordnung von Fig. 1 mit zugehörigen Strömen und Spannungen zur Beschreibung von dessen Temperaturverhalten; und

**Fig. 4** drei Strom-Spannungs-Kennlinien der applikationsspezifisch dimensionierten Stromregelschaltung von Fig. 1 bei verschiedenen Temperaturen.

In **Fig. 1** ist eine Schaltungsanordnung **1** zur Regelung des Laststroms $I_L$ an einer Last $R_L$ in Abhängigkeit von der Lastspannung $V_L$ und der Umgebungstemperatur T gezeigt, d.h. es ist $I_L = f(V_L, T)$. Die Schaltungsanordnung 1 weist die oben in Zusammenhang mit Fig. 2 beschriebenen Bauelemente auf, welche an dieser Stelle nicht nochmals beschrieben werden. Der in Fig. 2 gezeigte Differenzverstärker OV ist in Fig. 1 diskret aufgebaut und weist zwei basisgekoppelte, parametergepaarte Bipolar-Transistoren **Q1** und **Q2** auf, die thermisch gekoppelt sind. Beim ersten der beiden Transistoren Q1 ist die Basis-Kollektorstrecke überbrückt. Im Kollektorkreis des ersten Transistors Q1 befindet sich ein erster Widerstand **R1** (im kΩ-Bereich), im Kollektorkreis des zweiten Transistors Q2 ein dritter Widerstand **R3** (ebenfalls im kΩ-Bereich), mit denen das Verhältnis der Kollektorströme (nicht gezeigt) der beiden Transistoren Q1, Q2 eingestellt werden kann.

Ein dritter Transistor **Q3** ist in der Schaltungsanordnung zur begrenzenden Regelung der Steuerspannung für den Leistungstransistor M1 vorgesehen.

Der dritte Transistor Q3 steuert den Stromfluss durch einen fünften Widerstand **R5** (ebenfalls im kΩ-Bereich), der zwischen den Leistungstransistor M1 und die Versorgungsspannung Vb geschaltet ist, sodass sich über den Spannungsabfall am fünften Widerstand R5 die Steuerspannung des Leistungstransistors M1 einstellen lässt. Die Regelabweichung W - X, d.h. der Unterschied zwischen der Spannung am Abgriff P (Führungsgröße W) und der Spannung am Shunt-Widersand $R_s$ (im mΩ- Bereich) (Regelgröße X) fällt entlang einer Serienschaltung aus den Basis-Emitter-Strecken der beiden Transistoren Q1, Q2 und einem vierten Widerstand **R4** (im Ω-Bereich) ab. Die Basis des dritten Transistors Q3 ist hierbei mit dem Kollektor des zweiten Transistors Q2 verbunden, sodass über der Basis-Emitter-Strecke des dritten Transistors Q3 dieselbe Spannung wie über der Serienschaltung aus Kollektor-Emitter-Strecke des zweiten Transistors Q2 und vierten Widerstand R4 abfällt. Dimensioniert man den vierten Widerstand R4 ausreichend niederohmig, sodass $U(R4) \ll UBE(Q3)$ ist, wird sichergestellt, dass die beiden Transistoren Q1 und Q2 bei näherungsweise gleicher Kollektor-Emitter-Spannung betrieben werden. Über der Kollektor-Emitter-Strecke des dritten Transistors Q3 stellt sich die Steuerspannung des Leistungstransistors M1 in Abhängigkeit von der Regelabweichung ein. Wenn die Regelabweichung W - X steigt, erhöht sich die Basis-Emitter-Spannung des zweiten Transistors Q2, sodass dessen Kollektorstrom ansteigt. Hierdurch sinkt das Basispotential des dritten Transistors Q3 und damit dessen Kollektorstrom. Hierdurch verringert sich der Spannungsabfall über dem fünften Widerstand R5, sodass das Gatepotential des Leistungstransistors M1 und damit der Laststrom $I_L$ steigen. Dies hat zur Folge, dass die Regelgröße X am Shunt-Widerstand $R_S$ zunimmt, wodurch die Regelabweichung W - X abnimmt, sodass die Schaltungsanordnung 10 einen geschlossenen Regelkreis bildet.

Zur Regelung des Laststroms $I_L$ in Abhängigkeit von der Lastspannung $V_L$ sind in der Schaltungsanordnung 1 ein vierter Transistor **Q4** sowie ein Kollektorwiderstand **R2** und ein Emitterwiderstand **R6** vorgesehen, wobei die Serienschaltung aus Basis-Emitter-Strecke des vierten Transistors Q4 und des Emitterwiderstands R6 parallel zur Last angeordnet ist, und wobei der Abgriff P für die Referenzspannung zwischen dem Kollektorwiderstand R2 und dem vierten Transistor Q4 angeordnet ist. Über den Kollektorstrom $I_C$ des vierten Transistors Q4 wird hierbei die am Kollektorwiderstand R2 abfallende Spannung in Abhängigkeit von der Lastspannung $V_L$ eingestellt, sodass die am Abgriff P bereitgestellte Referenzspannung aus einem konstanten Anteil $V_{ref}$ und dem variablen, von der Lastspannung $V_L$ abhängigen Spannungsabfall am Kollektorwiderstand R2 zusammengesetzt ist. Hierbei wird ausgenützt, dass der Kollektorstrom $I_C$ von der am Emitterwiderstand R6 abfallenden Spannung abhängt, welche bis auf einen konstanten, additiven Term proportional zur Lastspannung $V_L$ ist.

Im Folgenden wird die Funktion der Schaltungsanordnung 1 während des Betriebs zur Regelung des Laststroms $I_L$ anhand von Gleichungen beschrieben, welche die Ströme und Spannungen an den in Fig. 1 gezeigten Bauteilen miteinander in Beziehung setzen. Die in den unten stehenden Gleichungen auftretenden Bezeichnungen sind im Wesentlichen selbsterklärend. So bedeutet z.B. $I_C$(Q4) den Kollektorstrom durch den vierten Transistor Q4, U(R4) die am vierten Widerstand abfallende Spannung etc. Die in Fig. 1 für die Bezeichnung der Widerstände als Bauteile benutzten Bezeichnungen R1 bis R5 werden hierbei mit den zugehörigen Widerstandswerten identifiziert.

Regelt die Schaltungsanordnung 1 den Laststrom $I_L$, so werden mindestens die Transistoren Q1 bis Q3 im linearen Arbeitspunkt betrieben. Unter Vernachlässigung der Basisströme kann man folgende Gleichung für das Potential an den Basen der beiden Transistoren Q1 und Q2 aufstellen:

$$V_{ref} + \left[I_C(Q1) + I_C(Q4)\right] \cdot R_2 + U_{BE}(Q1) = U_{BE}(Q2) + I_C(Q2) \cdot R_4 + I_L \cdot R_s \qquad (1)$$

Die Basen der Transistoren Q1 und Q2 liegen aufgrund der Überbrückung auf gleichem Potential wie der Kollektor des ersten Transistors Q1, d.h. es gilt: $U_{CE}(Q1) = U_{BE}(Q1)$. Ferner gilt: $U_{CE}(Q2) = U_{BE}(Q3) - U(R4)$.

Wählt man den Widerstandswert von R4 so, dass $U(R4) \ll U_{BE}(Q3)$ gilt, folgt, dass die Kollektoren der beiden Transistoren Q1 und Q2 in etwa auf gleichem Potential liegen, weil die Basis-Emitter-Spannungen der Transistoren Q1 bis Q3 bei geeigneter Schaltungsdimensionierung näherungsweise gleiche Beträge aufweisen. Mit $V_b \gg |V_C(Q1) - V_C(Q2)|$ gilt in guter Näherung:

$$\frac{I_C(Q1)}{I_C(Q2)} = \frac{R_3}{R_1} \quad \Rightarrow \quad I_C(Q2) = I_C(Q1) \cdot \frac{R_1}{R_3} \qquad (2)$$

Einsetzen von Gleichung (2) in Gleichung (1) und auflösen nach $I_L$ liefert:

$$I_L = \frac{V_{ref} + I_C(Q1) \cdot R_2 + I_C(Q4) \cdot R_2 + U_{BE}(Q1) - U_{BE}(Q2) - I_C(Q1) \cdot \frac{R_1}{R_3} \cdot R_4}{R_s},$$

und nach Vereinfachung:

$$I_L = \frac{V_{ref} + I_C(Q1) \cdot \left(R_2 - \frac{R_1 \cdot R_4}{R_3}\right) + I_C(Q4) \cdot R_2 + U_{BE}(Q1) - U_{BE}(Q2)}{R_s}.$$

Wählt man nun $R_2 = \dfrac{R_1 \cdot R_4}{R_3}$, was bei der Schaltungsanordnung 1 von Fig. 1 als erfüllt angesehen wird, so ist $I_L$ unabhängig von $I_C$(Q1) und damit auch unabhängig von der Versorgungsspannung $V_b$:

$$I_L = \frac{V_{ref} + I_C(Q4) \cdot R_2 + U_{BE}(Q1) - U_{BE}(Q2)}{R_s}.$$

Da $I_C(Q4)$ von der Lastspannung $V_L$ abhängig ist (s.o.), gilt für den Laststrom $I_L$, dass dieser auch wie eingangs gefordert von $V_L$ abhängig ist:

$$I_L = \frac{V_{ref} + \dfrac{V_L - U_{EB}(Q4)}{R_6} \cdot R_2 + U_{BE}(Q1) - U_{BE}(Q2)}{R_s} \qquad (3)$$

Hierbei ist darauf hinzuweisen, dass Gleichung (3) und alle aus ihr abgeleiteten Gleichungen streng genommen nur für $V_L \geq U_{EB}(Q4)$ gültig sind, da $I_C(Q4)$ nicht negativ wird. Daher ist eine Fallunterscheidung notwendig:

Für $V_L < U_{EB}(Q4)$ gilt:

$$I_L = \frac{V_{ref} + U_{BE}(Q1) - U_{BE}(Q2)}{R_s} \qquad (3a)$$

Für $V_L \geq U_{EB}(Q4)$ gilt Gleichung (3). Da die hier beschriebenen Gleichungen primär im funktionellen und erst sekundär im mathematischen Sinn zu verstehen sind, wird im Folgenden nur der Fall $I_L > 0$ betrachtet und beschrieben.

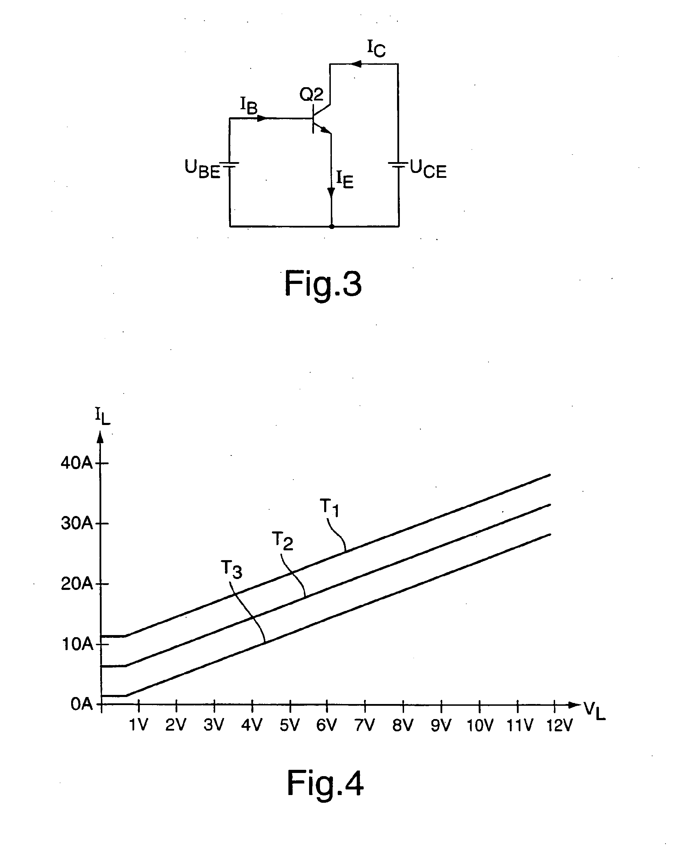

Um zu verstehen, dass der Strom $I_L$ nach Gleichung (3), wie eingangs gefordert, definiert von der Temperatur T abhängt, ist in **Fig. 3** der zweite Transistor Q2 mit den zugehörigen Kollektor-, Basis- und Emitter-Strömen **$I_C$, $I_B$** und **$I_E$** sowie der Basis-Emitter-Spannung **$U_{BE}$** und der Kollektor-Emitter-Spannung **$U_{CE}$** gezeigt. Es gilt:

$$I_{C0} = B_0 \cdot I_B \qquad (4)$$

$$I_{E0} = I_{C0} + I_B . \qquad (5)$$

Hierbei bezeichnet $I_{C0}$ den Kollektorstrom und $I_{E0}$ den Emitterstrom im Normalbetrieb bei kleiner Kollektor-Emitter-Spannung $U_{CE}$, sowie $B_0$ die Stromverstärkung für diesen Fall. Einsetzen von (4) in (5) liefert:

$$I_{E0} = B_0 \cdot I_B + I_B = (B_0 + 1) \cdot I_B , \qquad (6)$$

teilen von (4) durch (6) liefert:

$$\frac{I_{C0}}{I_{E0}} = \frac{B_0 \cdot I_B}{(B_0 + 1) \cdot I_B} \quad \Rightarrow \quad I_{C0} = \frac{B_0}{B_0 + 1} \cdot I_{E0} . \qquad (7)$$

Für den Kollektorstrom $I_C$ gilt allgemein:

$$I_C = I_{C0} \cdot \left( 1 + \frac{U_{CE}}{U_A} \right) \qquad (8)$$

wobei $I_C$ der Kollektorstrom in Abhängigkeit von der Kollektor-Emitter-Spannung $U_{CE}$ und $U_A$ die Early-Spannung ist. Die Abhängigkeit des Kollektorstroms $I_C$ von der Kollektor-Emitter-Spannung $U_{CE}$ wird hierbei durch den Early-Effekt bewirkt. $I_{C0}$ ist der oben angegebene, von der Kollektor-Emitter-Spannung $U_{CE}$ unabhängige Kollektorstrom für $U_{CE} \ll U_A$, d.h. der Kollektorstrom ohne Berücksichtigung des Early-Effektes.

Einsetzen von (7) in (8) liefert:

$$I_C = \frac{B_0}{B_0 + 1} \cdot I_{E0} \cdot \left(1 + \frac{U_{CE}}{U_A}\right) \qquad (9)$$

Im Folgenden wird die Beschreibung des Zusammenhangs zwischen Stromfluss durch und Spannungsabfall an einem PN-Übergang, wie er zwischen Basis und Emitter des Transistors Q2 (Emitterdiode) vorliegt, betrachtet. Es gilt:

$$I_F = I_S \cdot e^{\frac{U_F}{n \cdot U_T}} \qquad (10)$$

wobei $I_F$ den Stromfluss durch eine Diode (PN-Übergang), $I_S$ den Sättigungssperrstrom, $U_F$ den Spannungsabfall über der Diode in Flussrichtung, n den Emissionskoeffizienten und $U_T$ die Temperaturspannung bezeichnen.

Bei Gleichung (10) handelt es sich um die allseits bekannte, nach dem Transistor-Erfinder William Shockley benannte Shockley-Gleichung. Für die Emitterdiode im Transistor Q2 ergibt sich entsprechend:

$$I_{E0} = I_{ES} \cdot e^{\frac{U_{BE}}{n \cdot U_T}} \; , \qquad (11)$$

wobei $I_{ES}$ den Sättigungssperrstrom der Emitterdiode bezeichnet. Einsetzen von (11) in (9) liefert:

$$I_C = \frac{B_0}{B_0 + 1} \cdot I_{ES} \cdot e^{\frac{U_{BE}}{n \cdot U_T}} \cdot \left(1 + \frac{U_{CE}}{U_A}\right). \qquad (12)$$

Es versteht sich, dass die Gleichungen (4) bis (12) das Verhalten eines Bipolar-Transistors im Normalbetrieb, also bei $U_{CE} \geq U_{BE} > 0$ beschreiben.

Setzt man Gleichung (12) in Gleichung (2) ein, so folgt:

$$\frac{\dfrac{B_0(Q1)}{B_0(Q1) + 1} \cdot I_{ES}(Q1) \cdot e^{\frac{U_{BE}(Q1)}{n(Q1) \cdot U_T(Q1)}} \cdot \left(1 + \dfrac{U_{CE}(Q1)}{U_A(Q1)}\right)}{\dfrac{B_0(Q2)}{B_0(Q2) + 1} \cdot I_{ES}(Q2) \cdot e^{\frac{U_{BE}(Q2)}{n(Q2) \cdot U_T(Q2)}} \cdot \left(1 + \dfrac{U_{CE}(Q2)}{U_A(Q2)}\right)} = \frac{R_3}{R_1}. \qquad (13)$$

Verwendet man wie in der Schaltungsanordnung 1 von Fig. 1 als Transistoren Q1 und Q2 thermisch gekoppelte Transistoren mit gepaarten Eigenschaften (einen Doppeltransistor), so gilt:

$$B_0(Q1) \quad \approx \quad B_0(Q2)$$

$$I_{ES}(Q1) \quad \approx \quad I_{ES}(Q2)$$

$$n(Q1) \quad \approx \quad n(Q2) \quad = \quad n$$

$$U_T(Q1) \quad \approx \quad U_T(Q2) \quad = \quad U_T.$$

In der Schaltungsanordnung 1 nach Fig. 1 werden Q1 und Q2 bei Kollektor-Emitter-Spannungen betrieben, die deutlich kleiner als deren Early-Spannung sind. Der Erfinder hat bei dem als Doppel-Transistor in der Schaltungsanordnung von Fig. 1 verwendeten BC846B die Early-Spannung ermittelt; diese lag über 100 V. Daher gilt für die Schaltungsanordnung 1 $U_{CE} \ll U_A$ und $|U_{CE}(Q1) - U_{CE}(Q2)| \lll U_A$, d.h. der Einfluss des Early-Effektes kann mit Sicherheit vernachlässigt werden. Gleichung (13) vereinfacht sich daher zu:

$$\frac{e^{\frac{U_{BE}(Q1)}{n \cdot U_T}}}{e^{\frac{U_{BE}(Q2)}{n \cdot U_T}}} = \frac{R_3}{R_1} \quad \Rightarrow \quad \ln\left(\frac{e^{\frac{U_{BE}(Q1)}{n \cdot U_T}}}{e^{\frac{U_{BE}(Q2)}{n \cdot U_T}}}\right) = \ln\left(\frac{R_3}{R_1}\right)$$

und somit zu:

$$\frac{U_{BE}(Q1)}{n \cdot U_T} - \frac{U_{BE}(Q2)}{n \cdot U_T} = \ln\frac{R_3}{R_1} \quad ,$$

bzw.

$$U_{BE}(Q1) - U_{BE}(Q2) = n \cdot U_T \cdot \ln\frac{R_3}{R_1} \quad . \tag{14}$$

Setzt man Gleichung (14) in Gleichung (3) ein, so ergibt sich:

$$I_L = \frac{V_{ref} + \frac{V_L - U_{EB}(Q4)}{R_6} \cdot R_2 + n \cdot U_T \cdot \ln\frac{R_3}{R_1}}{R_s} \quad . \tag{15}$$

$U_T$ ist die Temperaturspannung und entspricht der Potentialdifferenz, die ein thermisch motiviertes Elektron aufgrund seiner kinetischen Energie bei der Temperatur T im Mittel überwinden kann. Es gilt:

$$U_T = \frac{k \cdot T}{e} = \frac{1{,}3807 \cdot 10^{-23} \cdot \frac{J}{K}}{1{,}6022 \cdot 10^{-19} \cdot As} \cdot T = 86{,}17 \, \frac{\mu V}{K} \cdot T \quad , \tag{16}$$

wobei k die Bolzmann-Konstante, T die absolute Temperatur und e die Elementarladung bezeichnen. Einsetzen von (16) in (15) ergibt:

$$I_L = \frac{V_{ref} + \frac{V_L - U_{EB}(Q4)}{R_6} \cdot R_2 + n \cdot 86{,}17 \, \frac{\mu V}{K} \cdot T \cdot \ln\frac{R_3}{R_1}}{R_s} \quad . \tag{17}$$

Den Temperaturkoeffizienten von $I_L$ erhält man, indem man Gleichung (17) nach der absoluten Temperatur T differenziert (der Temperaturkoeffizient von $U_{EB}$(Q4) sei hierbei vernachlässigt):

$$\frac{dI}{dT} = \frac{n}{R_s} \cdot 86{,}17 \, \frac{\mu V}{K} \cdot \ln \frac{R_3}{R_1} \tag{18}$$

Bipolar-Kleinsignaltransistoren, die bei kleinen Kollektorströmen im Normalbetrieb eingesetzt werden, wie es in der Schaltungsanordnung 1 nach Fig. 1 der Fall ist, weisen üblicherweise einen Emissionskoeffizienten n = 1 auf. Ihr Basis-Emitter-PN-Übergang ist hoch dotiert und weist eine Kennliniensteilheit ähnlich einem idealen PN-Übergang, aber nur eine geringe Sperrfähigkeit auf. Die Temperaturabhängigkeit I = f(T) der Anordnung nach Fig.1 ist somit nur von der Schaltungsdimensionierung und der Temperaturspannung abhängig. Da die Temperaturspannung auf Naturkonstanten rückführbar ist, kann sie ebenfalls als Naturkonstante betrachtet werden; I = f(T) ist somit bestimmt. Die Gleichungen (17) und (18) werden durch SPICE- Simulationen und Labormessungen in guter Näherung bestätigt, deren Resultate für die Strom-Spannungs-Kennlinie ($I_L(V_L)$) in **Fig. 4** für drei Temperaturwerte $\mathbf{T_1}$ = - 25°C, $\mathbf{T_2}$ = 50°C und $\mathbf{T_3}$ = 125°C dargestellt sind.

Die Schaltungsanordnung 1 von Fig.1 umfasst vergleichsweise wenige Bauteile und kann kostengünstig diskret realisiert werden. Diskrete Transistorschaltungen weisen einen typischen Arbeitstemperaturbereich von -40°C bis +150°C auf und eignen sich insbesondere für den Einsatz in einem Kraftfahrzeug, wo vergleichsweise hohe und niedrige Umgebungstemperaturen auftreten. So kann die Anordnung besonders vorteilhaft als Kurzschluss- und Grenzstromregler für einen Gebläsemotor in einem Personenkraftwagen Verwendung finden. Es versteht sich, dass an Stelle der Spannung $V_S$ am Shunt-Widerstand $R_S$ auch eine andere zum Laststrom $I_L$ proportionale Größe als Regelgröße gewählt werden kann, z.B. das Ausgangssignal eines Stromsensors, was aber zusätzliche, aktive Bauelemente erfordern würde.

Auch kann die Schaltungsanordnung 1 nicht nur zur Regelung eines Gebläsemotors eingesetzt werden, sondern kann bei entsprechender Abwandlung auch für Lasten mit einem anderen Temperaturverhalten ausgelegt werden. Dies ist z.B. dann der Fall, wenn eine Last vorhanden ist, bei welcher der Laststrom $I_L$ mit zunehmender Temperatur zunehmen soll. In diesem Fall kann die Schaltungsanordnung 1 mit einem positiven Temperaturkoeffizienten ausgestattet werden, und zwar indem das Verhältnis des dritten Widerstands R3 zum ersten Widerstand R1 größer als Eins gewählt wird. Die Schaltungsanordnung kann hierbei insbesondere auch zur Kompensation einer ggf. vorhandenen Temperaturabhängigkeit der Referenzspannung $V_{ref}$ dienen, wenn diese - wie aus Kostengründen in Kraftfahrzeugen üblich - durch eine Diodenschaltung erzeugt wird. Auch kann durch identische Wahl der Kollektorruheströme eine Schaltungsanordnung hergestellt werden, deren Verhalten nicht von der Temperatur abhängt, was insbesondere bei Lasten, die ebenfalls keine Temperaturabhängigkeit zeigen, vorteilhaft sein kann.

Die in Fig. 1 gezeigte Schaltungsanordnung 1 weist eine im Wesentlichen proportionale bzw. antiproportionale funktionale Abhängigkeit des Laststroms $I_L$ von der Lastspannung $V_L$ bzw. der Temperatur T auf. Es versteht sich, dass durch geeignete Modifikation der Schaltungsanordnung 1 auch nahezu beliebige andere funktionale Abhängigkeiten $I_L$ = f($V_L$, T) eingestellt werden können, wodurch die Schaltungsanordnung 1 an eine Vielzahl von verschiedenen Lasttypen angepasst werden kann.

**Patentansprüche**

1. Schaltungsanordnung (1, 10) zur Regelung eines Stroms ($I_L$) durch einen Gebläsemotor als Last ($R_L$), mit:

   einem Widerstand ($R_S$), der vom Laststrom ($I_L$) durchflossen wird und an dem eine Spannung ($V_S$) abfällt, welche als Regelgröße (X) für die Regelung des Laststroms ($I_L$) dient,
   einem Abgriff (P) für eine Referenzspannung ($V_{ref}$), welche als Führungsgröße (W) für die Regelung des Laststroms ($I_L$) dient, und
   einem Differenzverstärker (OV) zur Verstärkung der Regelabweichung (W-X) zwischen Führungsgröße (W) und Regelgröße (X),
   **dadurch gekennzeichnet,**
   **dass** zur Regelung des Laststroms ($I_L$) in Abhängigkeit von der Lastspannung ($V_L$) ein Transistor (Q4) sowie ein Kollektorwiderstand (R2) und ein Emitterwiderstand (R6) vorgesehen sind, wobei die Serienschaltung aus Basis-Emitter-Strecke des Transistors (Q4) und des Emitterwiderstands (R6) parallel zur Last ($R_L$) angeordnet ist,
   wobei der Abgriff (P) der Referenzspannung zwischen dem Kollektorwiderstand (R2) und dem Transistor (Q4) angeordnet ist, und wobei der Differenzverstärker einen ersten und zweiten basisgekoppelten Transistor (Q1, Q2) aufweist, sowie eine Einrichtung zur Einstellung eines konstanten Verhältnisses der Kollektorruheströme durch die basisgekoppelten Transistoren (Q1, Q2) vorgesehen ist, die ausgebindet ist, den maximalen Laststrom (I$_L$) durch den Gebläsemotor bei zunehmender Umgebungstemperatur zu senken.

2. Schaltungsanordnung nach Anspruch 1, bei der die Einrichtung durch zwei Widerstände (R1, R3) gebildet ist.

3. Schaltungsanordnung nach Anspruch 2, bei der die basisgekoppelten Transistoren (Q1, Q2) gleiche Kollektor-Emitter-Spannungen aufweisen.

4. Schaltungsanordnung nach einem der vorhergehenden Ansprüche, bei der die basisgekoppelten Transistoren (Q1, Q2) durch einen Doppeltransistor gebildet sind.

5. Schaltungsanordnung nach einem der vorhergehenden Ansprüche, welche mindestens einen weiteren Transistor (M1), bevorzugt einen Leistungstransistor, als Stellglied zur Beeinflussung des Laststroms (I$_L$) aufweist.

6. Schaltungsanordnung nach Anspruch 5, welche einen dritten Transistor (Q3) zur begrenzenden Regelung der Steuerspannung des weiteren Transistors (M1) aufweist.

7. Schaltungsanordnung nach Anspruch 6, bei welcher der Differenzverstärker (Q1, Q2) und der dritte Transistor (Q3) derart verschaltet sind, dass der dritte Transistor (Q3) die Steuerspannung des weiteren Transistors (M1) in Abhängigkeit von der Regelabweichung (W-X) beeinflusst.

8. Schaltungsanordnung nach einem der vorhergehenden Ansprüche, welche aus diskreten Bauteilen aufgebaut ist.

9. Kraftfahrzeuggebläse mit einer Schaltungsanordnung (1) nach einem der vorhergehenden Ansprüche.

10. Kraftfahrzeuggebläse nach Anspruch 9, bei dem die basisgekoppelten Transistoren (Q1, Q2) mit dem Luftstrom einer Klimaanlage thermisch gekoppelt sind.

**Claims**

1. A circuit arrangement (1, 10) for the regulation of a current (I$_L$) through a fan motor as a load (R$_L$), with:

   a resistance (R$_S$), through which a load current (I$_L$) flows and across which a voltage (V$_S$) drops, which serves as a control variable (X) for the regulation of the load current (I$_L$),
   a tapping point (P) for a reference voltage (V$_{ref}$), which serves as a command variable (W) for the regulation of the load current (I$_L$), and
   a differential amplifier (OV) for the amplification of the control deviation (W - X) between command variable (W) and control variable (X),
   **characterised in that**
   for the regulation of the load current (I$_L$) as a function of the load voltage (V$_L$) a transistor (Q4) and also a collector resistance (R2) and an emitter resistance (R6) are provided, wherein
   the series connection of the base-emitter section of the transistor (Q4) and the emitter resistance (R6) is arranged parallel to the load (R$_L$), wherein the tapping point (P) for the reference voltage is arranged between the collector resistance (R2) and the transistor (Q4), and wherein the differential amplifier has a first and a second base-coupled transistor (Q1, Q2) and a device is provided for the adjustment of a constant ratio of the collector quiescent currents through the base-coupled transistors (Q1, Q2), which is designed to reduce the maximum load current (I$_L$) through the fan motor with increasing ambient temperature.

2. A circuit arrangement according to claim 1, in which the device is formed by two resistances (R1, R3).

3. The circuit arrangement according to claim 2, in which the base-coupled transistors (Q1, Q2) have identical collector-emitter voltages.

4. The circuit arrangement according to one of the preceding claims, in which the base-coupled transistors (Q1, Q2) are formed by a dual transistor.

5. The circuit arrangement according to one of the preceding claims, which has at least one further transistor (M1), preferably a power transistor, as an actuating element for the adjustment of the load current ($I_L$).

6. The circuit arrangement according to claim 5, which has a third transistor (Q3) for the regulation of the control voltage of the further transistor (M1) in a limiting manner.

7. The circuit arrangement according to claim 6, in which the differential amplifier (Q1, Q2) and the third transistor (Q3) are placed in the circuit such that the third transistor (Q3) adjusts the control voltage of the further transistor (M1) as a function of the control deviation (W - X).

8. The circuit arrangement according to one of the preceding claims, which is composed of discrete components.

9. A motor vehicle fan with a circuit arrangement (1) according to one of the preceding claims.

10. A motor vehicle fan according to claim 9, in which the base-coupled transistors (Q1, Q2) are thermally coupled to the air flow of an air conditioning system.


**Revendications**

1. Circuit (1, 10) pour réguler un courant ($I_L$) à travers un moteur de ventilateur en guise de charge ($R_L$), comprenant :

   une résistance ($R_S$) qui est parcourue par le courant de charge ($I_L$) et sur laquelle chute une tension ($V_S$) qui sert de grandeur réglée (X) pour la régulation du courant de charge ($I_L$),
   une prise (P) pour une tension de référence ($V_{ref}$) qui sert de grandeur de référence (W) pour la régulation du courant de charge ($I_L$), et
   un amplificateur différentiel (OV) pour amplifier l'écart de régulation (W-X) entre grandeur de référence (W) et grandeur réglée (X),
   **caractérisé en ce**
   **que** pour la régulation du courant de charge ($I_L$) en fonction de la tension de charge ($V_L$), il est prévu un transistor (Q4) ainsi qu'une résistance de collecteur (R2) et une résistance d'émetteur (R6), le circuit série composé de la jonction base-émetteur du transistor (Q4) et de la résistance d'émetteur (R6) étant disposé en parallèle avec la charge ($R_L$), la prise (P) de la tension de référence étant disposée entre la résistance de collecteur (R2) et le transistor (Q4), et l'amplificateur différentiel présentant un premier et un deuxième transistors couplés par la base (Q1, Q2), un dispositif pour régler un rapport constant des courants collecteurs de repos à travers les transistors couplés par la base (Q1, Q2) étant prévu, lequel est conçu pour abaisser le courant de charge ($I_L$) maximal à travers le moteur de ventilateur lorsque la température ambiante augmente.

2. Circuit selon la revendication 1, dans lequel le dispositif est formé par deux résistances (R1, R3).

3. Circuit selon la revendication 2, dans lequel les transistors couplés par la base (Q1, Q2) présentent des tensions collecteur-émetteur identiques.

4. Circuit selon une des revendications précédentes, dans lequel les transistors couplés par la base (Q1, Q2) sont formés par un transistor double.

5. Circuit selon une des revendications précédentes, lequel présente au moins un autre transistor (M1), de préférence un transistor de puissance, comme actionneur pour influencer le courant de charge ($I_L$).

6. Circuit selon la revendication 5, lequel présente un troisième transistor (Q3) pour la régulation limitatrice de la tension de commande de l'autre transistor (M1).

7. Circuit selon la revendication 6, dans lequel l'amplificateur différentiel (Q1, Q2) et le troisième transistor (Q3) sont câblés de manière que le troisième transistor (Q3) influence la tension de commande de l'autre transistor (M1) en fonction de l'écart de régulation (W-X).

8. Circuit selon une des revendications précédentes, lequel est constitué de composants discrets.

9. Ventilateur de véhicule automobile équipé d'un circuit (1) selon une des revendications précédentes.

10. Ventilateur de véhicule automobile selon la revendication 9, dans lequel les transistors couplés par la base (Q1, Q2) sont couplés thermiquement avec le flux d'air d'une climatisation.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030147193 A1

- US 3512047 A